# EUROPÄISCHE PATENTSCHRIFT

(11) **EP 0 960 912 B1**
(45) Veröffentlichungstag und Bekanntmachung des Hinweises auf die Patenterteilung: **09.07.2003**
(21) Anmeldenummer: 99109911.0
(22) Anmeldetag: 20.05.1999
(51) Int. Cl.: C09C 1/00, C09D 5/24, C08K 9/02

(54) **Pigmentmischung**
Pigment mix
Mélange pigmentaire

(30) Priorität: 28.05.1998 DE 19823867
(43) Veröffentlichungstag der Anmeldung: 01.12.1999
(73) Patentinhaber: MERCK PATENT GmbH, 64293 Darmstadt (DE)
(72) Erfinder: Vogt, Reiner Dr., 64289 Darmstadt (DE); Neugebauer, Eva-Maria, 64289 Darmstadt (DE); Schül, Norbert, 64646 Heppenheim (DE); Schoen, Sabine Dr., 64287 Darmstadt (DE); Osterried, Karl Dr., 64807 Dieburg (DE)

(56) Entgegenhaltungen:
- EP-A- 0 373 575
- EP-A- 0 633 299

## Beschreibung

Die vorliegende Erfindung betrifft Pigmentmischungen bestehend aus mindestens zwei Komponenten, wobei Komponente A mit ein oder mehreren Metalloxiden und/oder Metallen beschichtete SiO₂-Flakes und Komponente B ein oder mehrere elektrisch leitfähige Pigmente sind, sowie deren Verwendung in Lacken, Farben, Druckfarben und Kunststoffen.

Für verschiedene Anwendungsbereiche werden heute elektrisch leitfähige Pigmente eingesetzt, mit denen zum Beispiel antistatische Beschichtungen für elektronische Geräte, antistatische Fußbodenbeläge, antistatische Ausrüstungen explosionsgeschützter Räume oder elektrisch leitfähige Grundierungen für das Lackieren von Kunststoffen hergestellt werden können.

Für die Herstellung dunkler, leitfähiger Pigmente werden gegenwärtig Ruß, Graphit und mit Nickel beschichteter Graphit für die Herstellung heller Pigmente, Metallplättchen und Mischoxide, wie zum Beispiel Antimon dotiertes Zinnoxid, verwendet. Die genannten Mischoxide können dabei auch auf Trägern, beispielsweise Glimmer, SiO₂, Glas oder Bariumsulfat, aufgebracht sein.

Ruß und Graphit können jedoch auf Grund ihrer hohen Lichtabsorption im sichtbaren Spektralbereich nicht für transparente, helle oder farbige Beschichtungen eingesetzt werden. Ein weiteres Problem ist die starke Absorption im IR-Bereich, was zum Beispiel bei Sonneneinstrahlung zu einer vielfach unerwünschten Erwärmung der beschichteten Gegenstände führt.

Metallplättchen haben den Nachteil, daß sie korrosionsanfällig sind und in wäßrigen Formulierungen die Bildung von Wasserstoff verursachen können.

Die bisher eingesetzten anorganischen Oxide bzw. Mischoxide in Form von Plättchen, z.B. mit Glimmer als Trägermaterial, oder in einer Form, bei der die Abmessungen in den drei Raumrichtungen etwa gleich sind, z.B. trägerfreies mit Antimon dotiertes Zinnoxid, erfordern aufgrund ihrer geometrischen Form hohe Einsatzkonzentrationen um einen deutlichen Effekt zu zeigen.

Das Aufbringen einer zusätzlichen Schicht auf das Pigment bedeutet aber einen erheblichen Mehraufwand bei der Herstellung und führt zu einer verteuerung des Produktes. Außerdem weist das Pigment Werte für die Leitfähigkeit auf, die den hohen Anforderungen nicht genügen.

Zur Verbesserung der Leitfähigkeit polymerer Systeme, wie zum Beispiel von Kunststoffen, Lacken oder Druckfarben, ist es aus der DE-OS 42 12 950 bekannt ein Pigment einzusetzen, das aus einer Komponente A, welche aus einem oder mehreren leitfähigen, plättchenförmigen Pigmenten besteht, und einer Komponente B, die ein oder mehrere leitfähige, nicht-plättchenförmige Pigmente enthält, besteht.

Überraschenderweise wurde nun gefunden, daß ein Pigmentgemisch enthaltend beschichtete SiO₂-Flakes in Kombination mit elektrisch leitfähigen Pigmenten bessere leitfähige Eigenschaften aufweist, als die reinen leitfähigen Pigmente.

Gegenstand der Erfindung ist somit eine Pigmentmischung bestehend aus mindestens zwei Komponenten, wobei Komponente A mit ein oder mehreren Metalloxiden und/oder Metallen beschichtete SiO₂-Flakes und Komponente B ein oder mehrere elektrisch leitfähige Pigmente sind, wobei die Komponente A und die Komponente B verschieden sind. Gegenstand der Erfindung ist weiterhin die Verwendung der Pigmentmischung in Lacken, Farben, Druckfarben und Kunststoffen.

Gegenstand der Erfindung sind ebenfalls die Formulierungen, wie z. B. Farben, Lacke, Pulverlacke, Druckfarben, Kunststoffe und Agrarfolien, die das erfindungsgemäße Pigmentgemisch enthalten.

Die beschichteten SiO₂-Flakes können in jedem Verhältnis mit den elektrisch leitfähigen Pigmenten gemischt werden. Vorzugsweise ist das Verhältnis von Komponente A zu Komponente B 1 : 10 bis 10 : 1, insbesondere 1 : 2 bis 2 : 1.

Die nach der WO 93/08237 auf einem endlosen Band hergestellten SiO₂-Flakes basieren auf einer plättchenförmigen, transparenten Matrix und besitzen in der Regel eine Dicke zwischen 0,1 und 5 µm, insbesondere zwischen 0,2 und 2,0 µm. Die Ausdehnung in den beiden anderen Dimensionen beträgt üblicherweise zwischen 1 und 250 µm, vorzugsweise zwischen 2 und 100 µm und insbesondere zwischen 5 und 40 µm. Die SiO₂-Flakes werden mit einer oder mehreren Metallschichten und/oder Metalloxidschichten versehen. Geeignete Metalloxide oder Metalloxidgemische sind beispielsweise Titandioxid, Zirkonoxid, Zinkoxid, Eisenoxide und/oder Chromoxid, insbesondere TiO₂ und/oder Fe₂O₃. Die Beschichtung der SiO₂-Flakes kann z.B. erfolgen wie in der WO 93/08237 (naßchemische Beschichtung) oder DE-OS 196 14 637 (CVD-Verfahren) beschrieben.

Anstelle der äußeren Metalloxidschicht kann auch eine semitransparente Schicht eines Metalls verwendet werden. Geeignete Metalle dafür sind beispielsweise Cr, Ti, Mo, W, Al, Cu, Ag, Au, oder Ni. Bevorzugte Pigmente weisen folgenden Schichtenaufbau auf: SiO₂-Flakes + Metall + SiO₂ + Metalloxid.

Zur Erzielung spezieller Farbeffekte können in die hoch- bzw. niedrigbrechenden Metalloxidschichten zusätzlich noch feinteilige Partikel im Nanometergrößenbereich eingebracht werden. Als geeignet dafür erweisen sich beispielsweise feinteiliges TiO₂ oder feinteiliger Kohlenstoff (Ruß) mit Teilchengrößen im Bereich von 10 - 250 nm. Durch die lichtstreuenden Eigenschaften derartiger Partikel kann gezielt auf Glanz und Deckvermögen Einfluß genommen werden. Vorzugsweise sind die SiO₂-Flakes mit ein oder mehreren Metalloxiden beschichtet.

Unter den leitfähigen Pigmenten der Komponente B versteht man alle dem Fachmann bekannten Pigmente mit plättchenförmigen, nadelförmigen oder faserartigen Trägermaterialien, wie Glimmerplättchen, Glasplättchen, SiO₂-Flakes, keramische Plättchen, Glasfasern, Aluminiumoxidfasern oder Titandioxidfasem, die mit einer leitfähigen Schicht überzogen sind.

Prinzipiell kommen auch Kohlenstoffasern in Betracht, jedoch sind hier keine leitfähigen Beschichtungen zusätzlich nötig, weil die Fasern bereits eine ausreichende Leitfähigkeit besitzen. Unter nadelförmigen, faserartigen Teilchen sind Partikel zu verstehen, die ein Verhältnis von Länge zu Durchmesser aufweisen, das größer als 5 ist. Geeignete plättchenförmige Pigmente sind z.B. aus der EP 0 373 575 bekannt.

Gegenstand der Erfindung sind weiterhin Lacke, Druckfarben, Kunststoffe oder Pulverlacke, die mit dem erfindungsgemäßen Pigmentgemisch pigmentiert sind. Der Anteil des Pigmentgemisches beträgt dabei 1 bis 80 Gew.%, vorzugsweise mehr als 2 Gew.%, bezogen auf den Gesamtfestkörpergehalt des Anwendungssystems.

Als leitfähige Schicht auf einem Träger eignen sich besonders aluminiumdotiertes Zinkoxid, antimon-, halogen- und/oder phosphordotiertes Zinnoder Titandioxid.

Das Aufbringen der leitfähigen Schicht geschieht in an sich bekannter Weise, z.B. nach dem in der EP-A 0 139 557 beschriebenen Verfahren. Dabei sind alle üblichen leitfähigen Metalloxide bzw. Metalloxidgemische einsetzbar. Eine Auswahl solcher Materialien ist in der EP-A 0 139 557 auf Seite 5, Zeilen 5-19, genannt. Bevorzugt wird jedoch eine leitfähige Schicht aus mit Antimon dotiertem Zinnoxid, die in einer Menge von 25-100 Gew.%, insbesondere in einer Menge von 50-75 Gew.%, bezogen auf das plättchenförmige Substrat, aufgebracht wird.

Im Falle des Einsatzes einer aluminiumdotierten Zinkoxidschicht beträgt der Anteil der leitfähigen Schicht vorzugsweise 40 bis 200 Gew.% bezogen auf das Trägermaterial, bevorzugt wird mit 100 bis 200 Gew.% gearbeitet.

Besteht die leitfähige Schicht aus Zinn-IV-oxid oder Titandioxid, das mit mindestens einem Halogenid, vorzugsweise Fluorid, dotiert ist, so ist der Anteil der leitfähigen Schicht 20 bis 200 Gew.%, vorzugsweise 60 bis 150 Gew.%, bezogen auf das Trägermaterial. Derartige Pigmente sind z.B. aus der DE-OS 42 43 163 bekannt. Bei der leitfähigen Schicht aus mit Phosphor dotiertem Zinnoxid beträgt der Anteil der leitfähigen Schicht 25-100 Gew.% bezogen auf das Substrat, insbesondere 50-75 Gew.%. Derartige Pigmente sind z.B. aus der DE-OS 44 35 301 bekannt. Größere Mengen sind zwar an sich auch möglich, es wird damit jedoch keine weitere Erhöhung der Leitfähigkeit erzielt und die Pigmente werden zunehmend dunkler.

Vorzugsweise liegt das Zinn/Antimon-Verhältnis bei 2:1 bis 20:1, insbesondere bei 5:1 bis 10:1. Bei zu geringem Antimongehalt lassen sich keine hohen Leitfähigkeiten erzielen, während bei höherem Antimongehalt die Pigmente zunehmend dunkler werden.

Leitfähige, plättchenförmige Pigmente, die der Komponente B des erfindungsgemäßen Pigmentgemisches zuzuordnen sind, sind im Handel unter der Bezeichnung Minatec® (Merck KGaA, Darmstadt), Zelec® ECPM (DuPont) erhältlich. Ein unter dem Handelsnamen Minatec® CM 31 vertriebenes Produkt besteht aus Glimmerschuppen, die mit Antimon dotiertem Zinndioxid beschichtet sind. Unter der Bezeichnung Minatec® CM 30 wird ein leitfähiges Pigment vertrieben, das aus mit Titandioxid beschichtetem Glimmer besteht und als leitfähige Schicht eine antimondotierte Zinndioxidschicht besitzt.

Die Kombination von SiO₂-Flakes mit leitfähigen, plättchenförmigen und/oder nadelförmigen Partikeln führt zu leitfähigen Produkten, deren elektrische Eigenschaften besser sind, als die eines reinen leitfähigen Pigments. Besonders im Anwendungssystem, vor allem bei der Einarbeitung in Kunststoffe, werden die Vorteile deutlich. Die benötigten Einsatzkonzentrationen für das erfindungsgemäße Pigmentgemisch im Kunststoff (Pigmentvolumenkonzentration) sind deutlich geringer als im Fall herkömmlicher leitfähiger Pigmente. Das ist sowohl für den Preis von Vorteil als auch für die Eigenschaften des Anwendungssystems, da die Kunststoffeigenschaften an sich besser erhalten bleiben, wenn weniger Pigment eingebracht werden muß. Speziell der Einsatz von faserartigen leitfähigen Pigmenten führt häufig auch noch zu einer zusätzlichen Stabilisierung der mechanischen Eigenschaften des Kunststoffs.

Die erfindungsgemäße Pigmentmischung ist einfach und leicht handzuhaben. Die Pigmentmischung kann durch einfaches Einrühren in das Anwendungssystem eingearbeitet werden. Ein aufwendiges Mahlen und Dispergieren der Pigmente ist nicht erforderlich.

Die erfindungsgemäße Pigmentmischung kann zur Pigmentierung von Lacken, Druckfarben, Kunststoffen, Agrarfolien, Saatgutbeschichtung oder zur Lebensmitteleinfärbung verwendet werden. Die Konzentration der Pigmentmischung im zu pigmentierendem Anwendungssystem liegt in der Regel zwischen 0,01 und 50 Gew.%, bevorzugt zwischen 0,1 und 10 Gew.% bezogen auf den Gesamtfestkörpergehalt des Systems. Sie ist in der Regel abhängig vom konkreten Anwendungsfall.

Kunststoffe enthaltend das erfindungsgemäße Pigmentgemisch in Mengen von 0,1 bis 50 Gew. %, insbesondere 0,5 bis 7 Gew.%, zeichnen sich häufig durch einen besonderen Sparkle-Effekt aus.

Kunststoffe, die das erfindungsgemäße Pigmentgemisch in Mengen von 0,1 bis 10 Gew.% enthalten, sind ferner sehr gut für die Lasermarkierung geeignet. Die Markierungen beispielsweise mit einem CO₂- oder Nd-YAG-Laser führen zu kantenscharfen, abriebfesten Markierungen.

Im Lackbereich wird das Pigmentgemisch in Mengen von 5-35 Gew.% eingesetzt. Das Mischungsverhältnis der beschichteten SiO₂-Flakes mit Komponente B hängt vom gewünschten Effekt ab. Vorzugsweise werden die SiO₂-Flakes mit Komponente B im Verhältnis von 1 : 5, insbesondere von 1 : 3 eingesetzt. Im Lack hat die erfindungsgemäße Pigmentmischung den Vorteil, daß der angestrebte Farbflop-Effekt durch eine einschichtige Lackierung erzielt wird. Dieser Farbflop ist sehr deutlich ausgeprägt. Im Vergleich mit Lackierungen, die ein Interferenzpigment auf Basis von Glimmer enthalten statt der beschichteten SiO₂-Flakes, zeigen Lackierungen mit der erfindungsgemäßen Pigmentmischung eine deutliche Tiefenwirkung und einen Glitzereffekt.

Bei der Pigmentierung von Bindemittelsystemen, z. B. für Farben und Druckfarben für den Tiefdruck, Offsetdruck oder Siebdruck, haben sich insbesondere Pigmentgemische bestehend aus beschichteten SiO₂-Flakes mit Minatec® (Fa. Merck KGaA, Darmstadt) als besonders geeignet erwiesen. Das Pigmentgemisch wird in die Druckfarbe in Mengen von 2-35 Gew.%, vorzugsweise 5-25 Gew.%, und insbesondere 8-20 Gew.% eingearbeitet. Das Mischungsverhältnis von Komponente A zu Komponente B liegt vorzugsweise im Bereich von 1 : 5 bis 5 1. Die Druckfarben enthaltend das erfindungsgemäße Pigmentgemisch zeigen reinere Farbtöne und sind aufgrund der guten Werte für die Viskosität besser verdruckbar.

Gegenstand der Erfindung sind somit auch Formulierungen enthaltend das erfindungsgemäße Pigmentgemisch.

Die nachfolgenden Beispiele sollen die Erfindung erläutern, ohne sie jedoch zu begrenzen.

### Beispiele

### Beispiel 1

### Tiefdruckfarbe

bestehend aus:
- 70 g: Bindemittel der Gebrüder Schmidt 95MB011 auf Nitrocellulose-basis mit 20% Feststoffgehalt
- 15 g: Minatec® 31 CM (leitfähiges Pigment der Fa. Merck KGaA, Darmstadt, BRD)
- 15 g: TiO₂ beschichtete SiO₂-Flakes mit einer Teilchengröße von 5 bis 40 µm
- 30 g: 1-Ethoxy-2-propanol

### Beispiel 2

### Kunststoff

1 kg Polyethylen(PE-HD)granulat werden in einem Taumelmischer mit 2 g Haftmittel gleichmäßig benetzt. Dazu werden dann 10 g von TiO₂ beschichteten SiO₂-Flakes der Teilchengröße von 5-40 µm und 2 g Iriodin® LS 825 (leitfähiges Pigment der Fa. Merck KGaA, Darmstadt, BRD) mit einer Teilchengröße < 15 µm zugegeben und 2 min. lang gemischt

Dieses Granulat wird auf einer Spritzgießmaschine unter üblichen Bedingungen zu Stufenplättchen mit den Maßen 4 x 3 x 0,5 cm verarbeitet. Die Stufenplättchen zeichnen sich durch ihren Glanz und ihre Lasermarkierbarkeit aus.

### Beispiel 3

### Lack

- 30 g: mit TiO₂ beschichtete SiO₂-Flakes der Teilchengröße 5-40 µm (Fa Merck KGaA)
- 10 g: Minatec 40 CM (leitfähiges Pigment der Fa. Merck KGaA)
- 42 g: Basislack (AU-MF-System, FK = 19 %)
- 18 g: Verdünnermischung

Die Beschichtung zeichnet sich durch antistatisches Verhalten und einen Farbflop von hell-lila nach hell-grün aus.

## Patentansprüche

1. Pigmentgemisch bestehend aus mindestens zwei Komponenten, **dadurch gekennzeichnet, daß** Komponente A mit ein oder mehreren Metalloxiden und/oder Metallen beschichtete SiO₂-Flakes und Komponente B ein oder mehrere elektrisch leitfähige Pigmente sind, wobei die Komponente A und die Komponente B verschieden sind.

2. Pigmentgemisch nach Anspruch 1, **dadurch gekennzeichnet, daß** Komponente A mit TiO₂ und/oder Fe₂O₃ beschichtete SiO₂-Flakes sind.

3. Pigmentgemisch nach Anspruch 1 oder 2, **dadurch gekennzeichnet, daß** Komponente B mit ein oder mehreren Metalloxiden beschichtete Glimmerplättchen oder SiO₂-Plättchen sind, die als leitfähige Schicht eine mit Antimon, Fluor und/oder Phosphor dotierte Zinndioxidschicht aufweisen.

4. Pigmentgemisch nach einem der Ansprüche 1 bis 3, **dadurch gekennzeichnet, daß** Komponente A und Komponente B im Verhältnis 10 :1 bis 1 :10 gemischt sind.

5. Verwendung des Pigmentgemisches nach Anspruch 1 in Farben, Lacken, Druckfarben, Kunststoffen, zur Saatguteinfärbung und zur Lasermarkierung.

6. Formulierungen enthaltend ein Pigmentgemisch nach Anspruch 1.

## Claims

1. Pigment mixture consisting of at least two components, **characterised in that** component A comprises SiO₂ flakes coated with one or more metal oxides and/or metals, and component B comprises one or more electrically conductive pigments, where component A and component B are different.

2. Pigment mixture according to Claim 1, **characterised in that** component A are TiO₂- and/or Fe₂O₃-coated SiO₂ flakes.

3. Pigment mixture according to Claim 1 or 2, **characterised in that** component B are mica platelets or SiO₂ platelets which are coated with one or more metal oxides and which have, as conductive layer, an antimony-, fluorine- and/or phosphorus-doped tin dioxide layer.

4. Pigment mixture according to one of Claims 1 to 3, **characterised in that** component A and component B are mixed in a ratio of from 10:1 to 1:10.

5. Use of the pigment mixture according to Claim 1 in paints, lacquers, printing inks, plastics, for colouring seed and for laser marking.

6. Formulations comprising a pigment mixture according to Claim 1.

## Revendications

1. Mélange pigmentaire constitué d'au moins deux composants, **caractérisé en ce que** le composant A est constitué de lamelles de SiO₂ revêtues d'un ou plusieurs oxydes métalliques et/ou de métaux et le composant B d'un ou plusieurs pigments électriquement conducteurs, le composant A et le composant B étant différents.

2. Mélange pigmentaire selon la revendication 1, **caractérisé en ce que** le composant A est constitué de lamelles de SiO₂ revêtues de TiO₂ et/ou de Fe₂O₃.

3. Mélange pigmentaire selon la revendication 1 ou 2, **caractérisé en ce que** le composant B est constitué de lamelles de mica ou de lamelles de SiO₂ revêtues d'une ou plusieurs couches d'oxydes métalliques, présentant comme couche conductrice une couche de dioxyde d'étain dopée avec de l'antimoine, du fluor et/ou du phosphore.

4. Mélange pigmentaire selon l'une des revendications 1 à 3, **caractérisé en ce que** le composant A et le composant B sont mélangés dans un rapport compris entre 10:1 et 1:10.

5. Utilisation du mélange pigmentaire selon la revendication 1 dans les encres, vernis, encres d'imprimerie, matières plastiques, pour la coloration des semences et pour le marquage au laser.

6. Formulations contenant un mélange pigmentaire selon la revendication 1.
